# EUROPEAN PATENT SPECIFICATION

(11) **EP 4 170 779 B1**
(45) Date of publication and mention of the grant of the patent: **20.05.2026**
(21) Application number: 22828626.6
(22) Date of filing: 25.05.2022
(51) Int. Cl.: H01M 10/6556, H01M 10/6551, H01M 10/613, H01M 50/358, H01M 50/211, H01M 10/625

(54) **BATTERY MODULE**
BATTERIEMODUL
MODULE DE BATTERIE

(30) Priority: 22.06.2021 KR 20210080926
(43) Date of publication of application: 26.04.2023
(73) Proprietor: LG Energy Solution, Ltd., Seoul 07335 (KR)
(72) Inventor: KIM, Tae Geun, Daejeon 34122 (KR); AN, Hyuk, Daejeon 34122 (KR); YIM, Sangwook, Daejeon 34122 (KR); CHOI, Jonghwa, Daejeon 34122 (KR); LEE, Hyoungsuk, Daejeon 34122 (KR); YOON, Young Il, Daejeon 34122 (KR)
(74) Representative: Goddar, Heinz J.
(86) International application number: PCT/KR2022/007399
(87) International publication number: WO 2022/270778

(56) References cited:
- EP-A1- 3 376 557
- WO-A1-2019/163550
- CN-A- 101 626 089
- CN-U- 209 357 802
- JP-A- 2019 102 421
- JP-B2- 6 729 031
- KR-A- 20150 069 732
- KR-A- 20170 065 771
- KR-A- 20210 063 201
- US-A1- 2020 067 045
- US-A1- 2020 321 670

## Description

### [TECHNICAL FIELD]

### Cross Citation with Related Application(s)

This application claims the benefit of Korean Patent Application No. 10-2021-0080926 filed on June 22, 2021 with the Korean Intellectual Property Office.

The present invention relates to a battery module more particularly, to a battery module that enhances cooling performance and venting performance while increasing space efficiency.

### [BACKGROUND]

Along with the technology development and increased demand for mobile devices, the demand for batteries as energy sources is increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Small-sized mobile devices use one or several battery cells for each device, whereas middle or large-sized devices such as vehicles require high power and large capacity. Therefore, a middle or large-sized battery module having a plurality of battery cells electrically connected to one another is used.

The middle or large-sized battery module is preferably manufactured so as to have as small a size and weight as possible. Consequently, a prismatic battery, a pouch-shaped battery or the like, which can be stacked with high integration and has a small weight relative to capacity, is mainly used as a battery cell of the middle or large-sized battery module. Meanwhile, the battery module may include a module frame whose front and rear surfaces are opened to house the battery cell stack in the internal space, in order to protect the battery cell stack from external impact, heat or vibration.

Considering that the temperature of the battery cell is one of the factors that limit the output of the battery, the local temperature rise that occurs in the battery cell is highly likely to limit the output of the battery early, and thus it needs to be improved. In addition, recently, as the battery module has become larger in size, the number of battery cells stacked in the module has increased, the cooling deviation between the battery cells becomes more intense.

In addition, when a part of battery modules become an overvoltage, overcurrent or overheat state, the safety and operating efficiency of the battery module may be problematic. In particular, in order to improve the mileage, the battery module capacity tends to gradually increase, whereby it is necessary to design a structure that meets the strengthened safety standards and ensures the safety of vehicles and drivers. For this purpose, the necessity for a structure capable of effectively discharging gases and flames generated in a part of battery cells and thus minimizing the damage is uprising.

Therefore, there is a need to develop a battery module that can effectively discharge gases and/or flames generated when an ignition phenomenon occurs in some battery cells, while enhancing the cooling performance against the heat generated in the battery cell stack.

US 2020/067045 A1 describes a battery module including a partition wall to separate an upper space from a lower space, a first plate that defines the upper space together with the partition wall, and a second plate that is disposed above the first plate such that a gap is left between the first and second plates. A case has an opening that is formed to let the gap communicate with an outside of the case. The first plate has a through hole through which the upper space and the gap communicate. The battery module further includes a through path passing through the partition wall and each of the plates to let the lower space communicate with a space above the second plate. The upper space and the gap constitute an exhaust duct, while the lower space and a top space constitute a cooling duct.

EP 3 376 557 A1 describes a cell module assembly including: a plurality of cell modules arranged at a predetermined interval; and a pack structure including a pack tray that supports the plurality of cell modules and in which a passage is formed, wherein at least one first venting hole is formed in each of the plurality of cell modules, and a second venting hole matched to the at least one first venting hole and communicating with the passage is formed in the pack tray.

### [DETAILED DESCRIPTION OF THE INVENTION]

### [Technical Problem]

It is an object of the present invention to provide a battery module that enhances cooling performance and venting performance while increasing space efficiency.

The objects of the present invention are not limited to the aforementioned objects, and other objects which are not described herein should be clearly understood by those skilled in the art from the following detailed description and the accompanying drawings.

### [Technical Solution]

The present invention is defined according to the subject matter of the appended independent claim. Particular embodiments are given by the additional features of the appended dependent claims. According to one aspect, there is provided a battery module comprising: a battery cell assembly in which a plurality of battery cells are stacked; a module frame that houses the upper and lower surface and both side surfaces of the battery cell assembly and is opened in its front and rear surfaces; a heat sink that is located on the module frame, but also includes a plurality of cooling flow paths; and a venting cover that is located on the heat sink, wherein the battery cell assembly includes a first battery cell assembly and a second battery cell assembly, and wherein the first battery cell assembly and the second battery cell assembly are arranged separately in a direction facing each other.

The plurality of cooling flow paths protrude toward the venting cover with respect to the bottom surface of the heat sink, and a space between two cooling flow paths adj acent to each other among the plurality of cooling flow paths forms a venting flow path.

The venting cover protrudes toward a central part of the heat sink, but may also include a blocking part located on the venting flow path.

The plurality of cooling flow paths extend along the longitudinal direction of the heat sink, but may also be spaced apart from each other.

The upper part of the module frame may be formed with a cooling hole facing the upper surface of the battery cell assembly.

The cooling hole includes a first cooling hole and a second cooling hole, the first cooling hole faces an upper surface of the first battery cell assembly, and the second cooling hole may face an upper surface of the second battery cell assembly.

The battery module further comprises a heat transfer member located inside the cooling hole, wherein the heat transfer member may be located between the heat sink and the battery cell assembly.

The heat transfer member may be located between the heat sink and the upper surface of the first battery cell assembly and between the heat sink and the upper surface of the second battery cell assembly, respectively.

An upper part of the module frame may include at least one first venting hole formed between the first cooling hole and the second cooling hole.

A part of the at least one first venting hole is located adj acent to one surface of the first battery cell assembly, and the other part may be located adjacent to one surface of the second battery cell assembly.

The heat sink may be formed with at least one second venting hole at a position facing the at least one first venting hole.

The at least one second venting hole may be located between the first battery cell assembly and the second battery cell assembly, but is also located on the venting flow path.

The module frame includes a first U-shaped frame and a second U-shaped frame, the first U-shaped frame houses the upper surface and both side surfaces of the first battery cell assembly and the second battery cell assembly, and is opened in its front and rear surfaces, and the second U-shaped frame houses the bottom surface and both side surfaces of the first battery cell assembly and the second battery cell assembly, and may be opened in its front and rear surfaces.

The side surface of the first U-shaped frame includes a first extension part extending in outward direction, the side surface of the second U-shaped frame includes a second extension part extending in outward direction, and the first extension part and the second extension part may be in contact with each other.

The first extension part and the second extension part may be coupled to each other by a fixing member.

### [Advantageous Effects]

According to embodiments, the battery module can enhance cooling performance and venting performance while increasing space efficiency through a cooling flow path and a venting flow path formed by a heat sink and a venting cover located on the upper part of module frame.

The effects are not limited to the effects mentioned above and additional other effects not described above will be clearly understood from the detailed description and the appended drawings by those skilled in the art.

### [BRIEF DESCRIPTION OF THE DRAWINGS]

Fig. 1 is an exploded perspective view of a battery module according to an embodiment of;
Fig. 2 is a perspective view of a battery module in which the components of Fig. 1 are combined;
Fig. 3 is a diagram schematically showing a cross section taken along the cutting line A-A of Fig. 2;
Fig. 4 is an enlarged view of a region a of Fig. 3; and
Fig. 5 is a diagram showing a cooling flow path and a venting flow path of Fig. 1.

### [DETAILED DESCRIPTION OF THE EMBODIMENTS]

Hereinafter, various embodiments will be described in detail with reference to the accompanying drawings so that those skilled in the art can easily carry out them. The present invention may be modified in various different ways, and is not limited to the embodiments set forth herein.

Portions that are irrelevant to the description will be omitted to clearly describe the present invention, and like reference numerals designate like elements throughout the description.

Further, in the drawings, the size and thickness of each element are arbitrarily illustrated for convenience of description, and the present invention is not necessarily limited to those illustrated in the drawings. In the drawings, the thickness of layers, areas, etc. are exaggerated for clarity. In the drawings, for convenience of description, the thicknesses of some layers and areas are exaggerated.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Below, the battery module according to an embodiment will be described. However, a description will be given on the basis of the front and rear surfaces of the battery module, but is not necessarily limited thereto. Even in the case of the rear surface, it will be described in the same or similar manner.

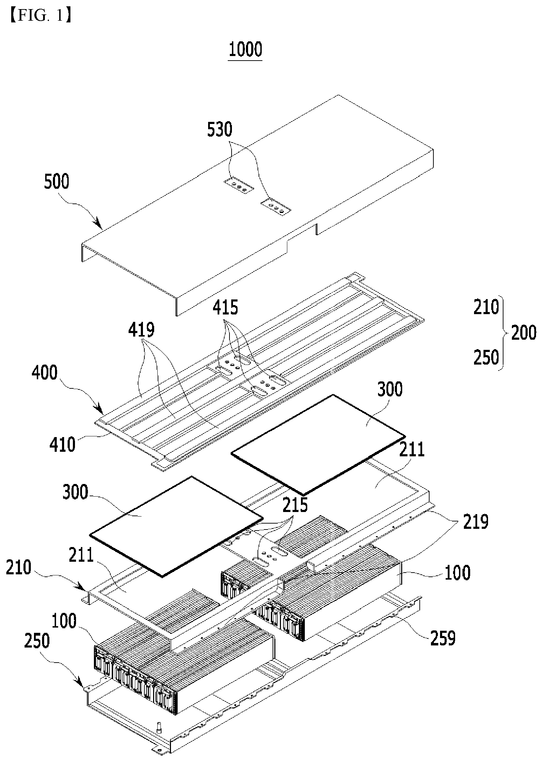

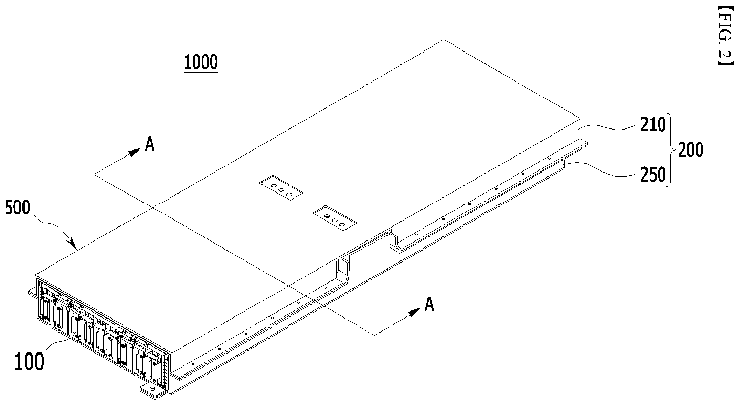

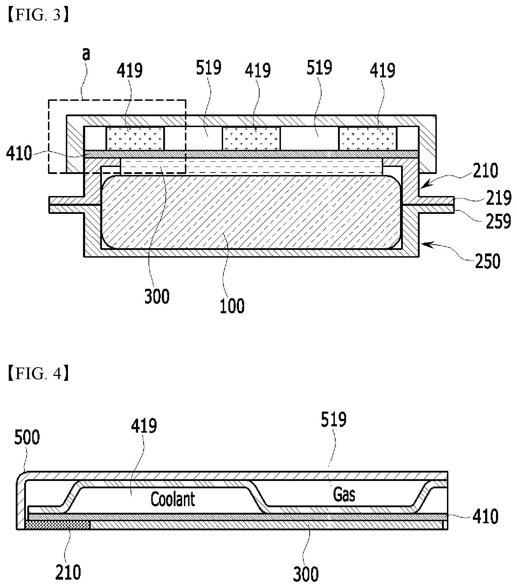

Fig. 1 is an exploded perspective view of a battery module according to an embodiment. Fig. 2 is a perspective view of a battery module in which the components of Fig. 1 are combined. Fig. 3 is a diagram schematically showing a cross section taken along the cutting line A-A of Fig. 2.

Referring to Figs. 1 to 3, a battery module 1000 according to an embodiment includes a battery cell assembly 100 in which a plurality of battery cells are stacked; a module frame 200 that houses the upper and lower surface and both side surfaces of the battery cell assembly 100 and is opened in its front and rear surfaces; a heat sink 400 that is located on the module frame 200, but also includes a plurality of cooling flow paths 419; and a venting cover 500 that is located on the heat sink 400.

Wherein, the battery cell assembly 100 includes a first battery cell assembly and a second battery cell assembly. More specifically, the first battery cell assembly and the second battery cell assembly may be arranged separately in a direction facing each other. Wherein, the direction facing each other may be a direction in which the front or rear surface of the first battery cell assembly and the front or rear surface of the second battery cell assembly face each other. More preferably, the direction facing each other may be a direction in which the front surface of the first battery cell assembly and the front surface of the second battery cell assembly face each other, or may be a direction in which the rear surface of the first battery cell assembly and the rear surface of the second battery cell assembly face each other. However, the first battery cell assembly and the second battery cell assembly only differ depending on their positions and may be the same battery cell assembly as each other.

In addition, the battery cell assembly 100 may be formed by stacking a plurality of battery cells. Wherein, the battery cell is preferably a pouch-type battery cell. In one example, the battery cell can be manufactured by housing the electrode assembly in a pouch case of a laminated sheet containing a resin layer and a metal layer, and then heat-sealing a sealing part of the pouch case. Further, such a battery cell can be formed in a rectangular sheet-like structure. Further, such a battery cell can be configured by a plurality of numbers, and the plurality of battery cells can be stacked so as to be electrically connected to each other, thereby forming a battery cell assembly 100.

Wherein, the battery module 200 may include a first U-shaped frame 210 and a second U-shaped frame 250. That is, the battery cell assembly 100 may be housed in the first U-shaped frame 210 and the second U-shaped frame 250. More specifically, the first U-shaped frame 210 may house the upper surface and both side surfaces of the first battery cell assembly and the second battery cell assembly, and may be opened in its upper surface and both side surfaces. Further, the second U-shaped frame 250 may house the bottom surface and both side surfaces of the first battery cell assembly and the second battery cell assembly, and may be opened in its front and rear surfaces.

Further, referring to Figs. 1 and 3, a side surface of the first U-shaped frame 210 includes a first extension part 219 extending in outward direction, and a side surface of the second U-shaped frame 250 may include a second extension part 259 extending in outward direction. Wherein, the outward direction may be a direction opposite to the direction toward the battery cell assembly 100 with respect to the side surface of the module frame 200.

Wherein, the first extension part 219 and the second extension part 259 may be in contact with each other. In one example, the first extension part 219 and the second extension part 259 may be coupled to each other by a fixing member. Wherein, the fixing member may be a member such as a bolt or a nut. In another example, the first extension part 219 and the second extension part 259 may be coupled to each other by a method such as welding. However, the present invention is not limited thereto, and any fixing method capable of sealing the inside of the module frame 200 from the external environment can be included in the present embodiment.

In another example, the module frame 200 may include an upper plate instead of the first U-shaped frame 210. Thereby, the second U-shaped frame 250 houses the lower surface and both side surfaces of the battery cell assembly 100, and may be opened in its front and rear surfaces, and the upper plate may house the upper surface of the battery cell assembly 100. However, the present invention is not limited thereto, and the first U-shaped frame 210 and the second U-shaped frame 250 can be replaced with other shaped frames such as an L-shaped frame or a mono frame.

Further, although not shown in the figure, the module frame 200 may be formed with a separate partition wall between the first battery cell assembly and the second battery cell assembly. Thereby, the module frame 200 can protect the first battery cell assembly and the second battery cell assembly from external impacts and also can prevent heat transfer to other battery cell assemblies when an ignition phenomenon occurs in some battery cell assemblies.

Further, referring to Figs. 1 and 3, the upper part of the module frame 200 may be formed with a cooling hole 211 facing the upper surface of the battery cell assembly 100. More specifically, the cooling hole 211 may include a first cooling hole and a second cooling hole. Wherein, the first cooling hole may face an upper surface of the first battery cell assembly, and the second cooling hole may face an upper surface of the second battery cell assembly.

More specifically, the cooling hole 211 may mean a hole that is opened toward the battery cell assembly 100 with respect to the upper surface of the module frame 200. In other words, in the upper surface of the module frame 200, the cooling hole 211 may be a region in which a part of the module frame 200 is removed so that a part of the upper surface of the battery cell assembly 100 is exposed.

Thereby, a part of the upper surface of the battery cell assembly 100 is opened by the cooling hole 211 in the upper part of the module frame 200, so that the heat sink 400 located on the upper part of the module frame 200 and the upper surface of the battery cell assembly 100 may be located adjacent to each other. That is, according to the present embodiment, a portion in which the module frame 200 is not formed may be formed between the heat sink 400 and the battery cell assembly 100, so that heat transfer between the heat sink 400 and the battery cell assembly 100 is efficient, and the cooling performance can be further enhanced.

Further, the module frame 200 may further include a heat transfer member 300 located inside the cooling hole 211, and the heat transfer member 300 may be located between the heat sink 400 and the battery cell assembly 200. Wherein, the heat transfer member 300 may extend along the length and width of the cooling hole 211.

More specifically, the heat transfer member 300 is located inside the first cooling hole, but may also be located between the heat sink 400 and the upper surface of the first battery cell assembly. Further, the heat transfer member 300 is located inside the second cooling hole, but may also be located between the heat sink 400 and the upper surface of the second battery cell assembly.

In one example, the heat transfer member 300 may be a thermally conductive resin layer formed by applying a thermally conductive resin. That is, the heat transfer member 300 may be formed as the thermally conductive resin previously applied to the inside of the cooling hole 211 is cured. In another example, the heat transfer member 300 may be a sheet or a pad made of a thermally conductive material. However, the present invention is not limited thereto, and any material and shape having thermal conductivity in which heat generated in the battery cell assembly 100 can be easily transferred to the heat sink 400 can be included in the present embodiment.

Therefore, in the present embodiment, the heat generated in the battery cell assembly 100 is transferred to the heat transfer member 300 making direct contact with the upper surface of the battery cell assembly 100 and is cooled by the heat sink 400 making contact with the heat transfer member 300, thereby capable of enhancing the cooling performance of the battery cell assembly 100. Further, the cooling deviation between the plurality of battery cells included in the battery cell assembly 100 can also be reduced, and the lifespan of the battery module 1000 can also be further improved.

Further, referring to Figs. 1 and 3, the upper part of the module frame 200 may include at least one first venting hole 215 formed between the first cooling hole and the second cooling hole. Wherein, a part of the at least one first venting hole 215 is located adjacent to one surface of the first battery cell assembly, and the other part may be located adjacent to one surface of the second battery cell assembly.

More specifically, the first venting hole 215 may mean a hole that is opened toward the inside of the module frame 200 with respect to the upper surface of the module frame 200. In other words, in the upper surface of the module frame 200, the first venting hole 215 may be a region in which a part of the module frame 200 is removed so that a part of the inside of the module frame 200 is exposed. In particular, the first venting hole 215 may be a hole that is opened toward a region located between one surface of the first battery cell assembly and one surface of the second battery cell assembly.

Thereby, the gas and/or flame generated when an ignition phenomenon occurs in the battery cell assembly 100 can be discharged to the outside through the at least one first venting hole 215, and the gas and flame discharged to the first venting hole 215 can be discharged to the outside through the venting flow path 519 formed between the heat sink 400 and the venting cover 500.

Further, although not shown in the figure, when a separate partition wall is formed between the first battery cell assembly and the second battery cell assembly in the module frame 200 as described above, at least one first venting hole 215 may be formed on both sides with the partition wall interposed therebetween. Thereby, the module frame 200 prevents heat transfer to other battery cell assemblies when an ignition phenomenon occurs in some battery cell assemblies, and also can easily discharge the generated flame and gas to the outside.

Fig. 4 is an enlarged view of a region a of Fig. 3.

Referring to Figs. 1, 3, and 4, the heat sink 400 is located in the upper part of the module frame 200, but may also extend along the upper part of the module frame 200. In other words, the heat sink 400 may simultaneously contact the first battery cell assembly and the second battery cell assembly with the heat transfer member 300 interposed therebetween.

Further, the heat sink 400 includes a plurality of cooling flow paths 419 through which a coolant flows. More specifically, the plurality of cooling flow paths 419 may extend along the longitudinal direction of the heat sink 400, but may also be spaced apart from each other. Wherein, the cooling flow path 419 may protrude in a direction toward the venting cover 500 with respect to the bottom surface 410 of the heat sink 400.

Wherein, the cooling flow path 419 may include an outlet formed on one side of the heat sink 400 and an inlet formed on the opposite side of the heat sink 400. The outlet allows the coolant contained in the cooling flow path 419 to be discharged to the outside, and the inlet can supply a coolant into the cooling flow path 419.

Thereby, according to the present embodiment, the heat sink 400 can simultaneously cool the first battery cell assembly and the second battery cell assembly, thereby enhancing the cooling performance and space efficiency.

In another example, the cooling flow path 419 may include a first cooling flow path and a second cooling flow path, unlike Fig. 1, wherein the first cooling flow path may be located on the first battery cell assembly, and the second cooling flow path may be located on the second battery cell assembly. At this time, the inlet and outlet of the first cooling flow path are formed on one side of the heat sink 400, and the inlet and outlet of the second cooling flow path may be formed on the opposite side of the heat sink 400.

Thereby, in the heat sink 400, the cooling flow path 419 is divided with respect to the first battery cell assembly and the second battery cell assembly, and when an ignition phenomenon occurs in some battery cell assemblies, heat transfer to other battery cell assemblies can be prevented.

Further, referring to Fig. 1, the heat sink 400 may be formed with at least one second venting hole 415 at a position facing the at least one first venting hole 215. Wherein, at least one first venting hole 215 and at least one second venting hole 415 may be located between the first battery cell assembly and the second battery cell assembly.

More specifically, the second venting hole 415 may mean a hole that is opened toward the first venting hole 215 with respect to the bottom surface 410 of the heat sink 400. In other words, in the bottom surface 410 of the heat sink 400, the second venting hole 415 may be a region where a part of the heat sink 400 is removed so as to face the first venting hole 215.

Thereby, the gas and/or flame generated when an ignition phenomenon occurs in the battery cell assembly 100 is discharged through the at least one first venting hole 215, but the gas and/or flame flowed into the first venting hole 215 may also be discharged to the outside through the second venting hole 415.

Further, referring to Figs. 1 to 4, the venting cover 500 is located on the heat sink 400, but may also extend along the upper part of the heat sink 400. In other words, the venting cover 500 may cover the upper part of the heat sink 400. In addition, based on the longitudinal direction of the heat sink 400, the venting cover 500 may extend along the side surface of the heat sink 400.

Further, referring to Figs. 3 and 4, between the venting cover 500 and the heat sink 400, a venting flow path 519 is provided in a space between two cooling flow paths 419 adjacent to each other among the plurality of cooling flow paths 419. At this time, the upper part of the cooling flow path 419 may be in contact with the upper surface of the venting cover 500. That is, among the spaces separated between the venting cover 500 and the heat sink 400, a space in which the cooling flow path 419 is not formed may be the venting passage 519. In particular, the second venting hole 415 may be located between the first battery cell assembly and the second battery cell assembly, but may also be located on the venting flow path 519.

Thereby, the venting flow path 519 is formed through the space formed between cooling flow paths 419 without additional components, so that the space efficiency of the battery module 1000 can be further enhanced, and the manufacturing cost can also be reduced. Further, the gas and flame discharged to the second venting hole 415 can be discharged in a direction induced through the venting flow path 519 formed between the heat sink 400 and the venting cover 500, so that the venting performance of the battery module 1000 can also be enhanced.

Further, referring to Figs. 1 and 2, the venting cover 500 protrudes toward a central part of the heat sink 400, but may also include a blocking part 530 located on the venting flow path 519. More specifically, the blocking part 530 may extend along between the venting cover 500 and the heat sink 400. In particular, the blocking part 530 may be located between a second venting hole 415 located adjacent to the first battery cell assembly and another second venting hole 415 located adjacent to the second battery cell assembly.

Thereby, in the venting cover 500, the venting flow path 519 is divided by the blocking part 530 with respect to the first battery cell assembly and the second battery cell assembly, and when an ignition phenomenon occurs in some battery cell assemblies, heat transfer to other battery cell assemblies can be prevented.

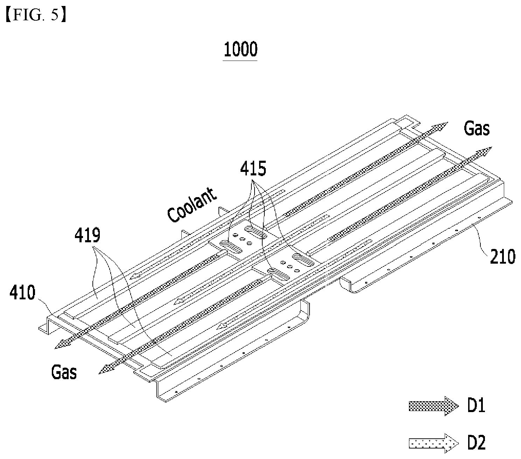

Fig. 5 is a diagram showing a cooling flow path and a venting flow path of Fig. 1.

Referring to Figs. 1, 4 and 5, in the battery module 1000 according to the present embodiment, gas may move along the first direction D1 through the venting flow path 519 formed between the heat sink 400 and the venting cover 500. As mentioned above, the gas may be flowed into the venting flow path 519 through the first venting hole 215 and the second venting hole 415, and the gas flowed into the venting flow path 519 may be discharged by moving along the first direction D1 toward one side and/or the other side of the heat sink 400 due to a pressure difference.

In addition, the coolant flowing in the cooling passage 419 formed in the heat sink 400 can move along the second direction D2, and the heat generated in the battery cell assembly 100 can be cooled by the coolant flowing in the cooling flow path 419. Wherein, the second direction D2 may vary depending on the arrangement of the inlet and the outlet of the cooling flow path 419 .

Thereby, the battery module 1000 according to the present embodiment can simultaneously form the cooling flow path 419 and the venting flow path 519 through the heat sink 400 and the venting cover 500, which is advantageous in enhancing both the cooling performance and the venting performance while increasing the space efficiency of the battery module 1000.

Meanwhile, one or more battery modules according to the present embodiment may be packaged in a pack case to form a battery pack.

The above-mentioned battery module and battery pack including the same can be applied to various devices. Such a device may be applied to a vehicle means such as an electric bicycle, an electric vehicle, or a hybrid vehicle, but the present invention is not limited thereto, and is applicable to various devices that can use a battery module and the battery pack including the same, which also falls under the scope of the present invention.

### [Description of Reference Numerals]

100: battery cell assembly
200: module frame
210: first U-shaped frame
211: cooling hole
215: first venting hole
250: second U-shaped frame
300: heat transfer member
400: heat sink
415: second venting hole
419: cooling flow path
500: venting cover
519: venting flow path

## Claims

1. A battery module (1000) comprising:
a battery cell assembly (100) in which a plurality of battery cells are stacked;
a module frame (200) that houses the upper and lower surface and both side surfaces of the battery cell assembly (100) and is opened in its front and rear surfaces;
a heat sink (400) that is located on the module frame (200), but also includes a plurality of cooling flow paths (419); and
a venting cover (500) that is located on the heat sink (400),
wherein the battery cell assembly (100) includes a first battery cell assembly and a second battery cell assembly,
wherein the first battery cell assembly and the second battery cell assembly are arranged separately in a direction facing each other,
wherein the plurality of cooling flow paths (419) protrude in a direction toward the venting cover (500) with respect to the bottom surface (410) of the heat sink (400), and
wherein a space between two cooling flow paths (419) adjacent to each other among the plurality of cooling flow paths (419) forms a venting flow path (519).

2. The battery module according to claim 1 wherein:
the venting cover (500) protrudes toward a central part of the heat sink (400), but also includes a blocking part (530) located on the venting flow path (519).

3. The battery module according to claim 1 wherein:
the plurality of cooling flow paths (419) extend along the longitudinal direction of the heat sink (400), but are also spaced apart from each other.

4. The battery module according to claim 1 wherein:
the upper part of the module frame (200) is formed with a cooling hole (211) facing the upper surface of the battery cell assembly (100).

5. The battery module according to claim 4 wherein:
the cooling hole (211) includes a first cooling hole and a second cooling hole, the first cooling hole faces an upper surface of the first battery cell assembly, and the second cooling hole faces an upper surface of the second battery cell assembly.

6. The battery module according to claim 4, further comprising a heat transfer member (300) located inside the cooling hole (211),
wherein the heat transfer member (300) is located between the heat sink (400) and the battery cell assembly (100).

7. The battery module according to claim 6 wherein:
the heat transfer member (300) is located between the heat sink (400) and the upper surface of the first battery cell assembly and between the heat sink (400) and the upper surface of the second battery cell assembly, respectively.

8. The battery module according to claim 5 wherein:
an upper part of the module frame (200) includes at least one first venting hole (215) formed between the first cooling hole and the second cooling hole.

9. The battery module according to claim 8 wherein:
a part of the at least one first venting hole (215) is located adjacent to one surface of the first battery cell assembly, and the other part is located adjacent to one surface of the second battery cell assembly.

10. The battery module according to claim 8 wherein:
the heat sink (400) is formed with at least one second venting hole (415) at a position facing the at least one first venting hole (215).

11. The battery module according to claim 10 wherein:
the at least one second venting hole (415) is located between the first battery cell assembly and the second battery cell assembly, but is also located on the venting flow path (519).

12. The battery module according to claim 1 wherein:
the module frame (200) includes a first U-shaped frame (210) and a second U-shaped frame (250),
the first U-shaped frame (210) houses the upper surface and both side surfaces of the first battery cell assembly and the second battery cell assembly, and is opened in its front and rear surfaces, and
the second U-shaped frame (250) houses the bottom surface and both side surfaces of the first battery cell assembly and the second battery cell assembly, and is opened in its front and rear surfaces.

13. The battery module according to claim 12 wherein:
the side surface of the first U-shaped frame (210) includes a first extension part (219) extending in outward direction,
the side surface of the second U-shaped frame (250) includes a second extension part (259) extending in outward direction, and
the first extension part (219) and the second extension part (259) are in contact with each other.

14. The battery module according to claim 13 wherein:
the first extension part (219) and the second extension part (259) are coupled to each other by a fixing member.

## Patentansprüche

1. Batteriemodul (1000) aufweisend:
eine Batteriezellenanordnung (100), in der mehrere Batteriezellen gestapelt sind;
einen Modulrahmen (200), der die obere Fläche und die untere Fläche und beide Seitenflächen der Batteriezellenanordnung (100) aufnimmt und in seiner vorderen Fläche und seiner hinteren Fläche geöffnet ist;
eine Wärmesenke (400), die sich auf dem Modulrahmen (200) befindet, aber auch mehrere Kühlströmungswege (419) aufweist; und
eine Lüftungsabdeckung (500), die sich auf der Wärmesenke (400) befindet,
wobei die Batteriezellenanordnung (100) eine erste Batteriezellenanordnung und eine zweite Batteriezellenanordnung aufweist,
wobei die erste Batteriezellenanordnung und die zweite Batteriezellenanordnung separat in einer Richtung angeordnet sind, die einander zugewandt sind,
wobei die mehreren Kühlströmungswege (419) in einer Richtung zu der Lüftungsabdeckung (500) in Bezug auf die Bodenfläche (410) der Wärmesenke (400) vorstehen, und
wobei ein Raum zwischen zwei zueinander benachbarten Kühlströmungswegen (419) unter den mehreren Kühlströmungswegen (419) einen Lüftungsströmungsweg (519) bildet.

2. Batteriemodul nach Anspruch 1, wobei:
die Lüftungsabdeckung (500) zu einem zentralen Teil der Wärmesenke (400) vorsteht, aber auch ein Blockierteil (530) aufweist, das sich auf dem Lüftungsströmungsweg (519) befindet.

3. Batteriemodul nach Anspruch 1, wobei:
sich die mehreren Kühlströmungswege (419) entlang der Längsrichtung der Wärmesenke (400) erstrecken, aber auch voneinander beabstandet sind.

4. Batteriemodul nach Anspruch 1, wobei:
der obere Teil des Modulrahmens (200) mit einem Kühlloch (211) ausgebildet ist, das der oberen Fläche der Batteriezellenanordnung (100) zugewandt ist.

5. Batteriemodul nach Anspruch 4, wobei:
das Kühlloch (211) ein erstes Kühlloch und ein zweites Kühlloch aufweist, wobei das erste Kühlloch einer oberen Fläche der ersten Batteriezellenanordnung zugewandt ist und das zweite Kühlloch einer oberen Fläche der zweiten Batteriezellenanordnung zugewandt ist.

6. Batteriemodul nach Anspruch 4, ferner aufweisend ein Wärmeübertragungselement (300), das sich innerhalb des Kühllochs (211) befindet,
wobei sich das Wärmeübertragungselement (300) zwischen der Wärmesenke (400) und der Batteriezellenanordnung (100) befindet.

7. Batteriemodul nach Anspruch 6, wobei:
sich das Wärmeübertragungselement (300) zwischen der Wärmesenke (400) und der oberen Fläche der ersten Batteriezellenanordnung bzw. zwischen der Wärmesenke (400) und der oberen Fläche der zweiten Batteriezellenanordnung befindet.

8. Batteriemodul nach Anspruch 5, wobei:
ein oberer Teil des Modulrahmens (200) mindestens ein erstes Lüftungsloch (215) aufweist, das zwischen dem ersten Kühlloch und dem zweiten Kühlloch ausgebildet ist.

9. Batteriemodul nach Anspruch 8, wobei:
ein Teil des mindestens einen ersten Lüftungslochs (215) sich benachbart zu einer Fläche der ersten Batteriezellenanordnung befindet und der andere Teil sich benachbart zu einer Fläche der zweiten Batteriezellenanordnung befindet.

10. Batteriemodul nach Anspruch 8, wobei:
die Wärmesenke (400) mit mindestens einem zweiten Lüftungsloch (415) an einer Position ausgebildet ist, die dem mindestens einen ersten Lüftungsloch (215) zugewandt ist.

11. Batteriemodul nach Anspruch 10, wobei:
das mindestens eine zweite Lüftungsloch (415) sich zwischen der ersten Batteriezellenanordnung und der zweiten Batteriezellenanordnung befindet, aber auch auf dem Lüftungsströmungsweg (519) befindet.

12. Batteriemodul nach Anspruch 1, wobei:
der Modulrahmen (200) einen ersten U-förmigen Rahmen (210) und einen zweiten U-förmigen Rahmen (250) aufweist,
der erste U-förmige Rahmen (210) die obere Fläche und beide Seitenflächen der ersten Batteriezellenanordnung und der zweiten Batteriezellenanordnung aufnimmt und in seiner vorderen Fläche und seiner hinteren Fläche geöffnet ist, und
der zweite U-förmige Rahmen (250) die untere Fläche und beide Seitenflächen der ersten Batteriezellenanordnung und der zweiten Batteriezellenanordnung aufnimmt und in seiner vorderen Fläche und seiner hinteren Fläche geöffnet ist.

13. Batteriemodul nach Anspruch 12, wobei:
die Seitenfläche des ersten U-förmigen Rahmens (210) ein erstes Verlängerungsteil (219) aufweist, das sich in einer Richtung nach außen erstreckt,
die Seitenfläche des zweiten U-förmigen Rahmens (250) ein zweites Verlängerungsteil (259) aufweist, das sich in einer Richtung nach außen erstreckt, und
das erste Verlängerungsteil (219) und das zweite Verlängerungsteil (259) miteinander in Kontakt sind.

14. Batteriemodul nach Anspruch 13, wobei:
das erste Verlängerungsteil (219) und das zweite Verlängerungsteil (259) durch ein Befestigungselement miteinander gekoppelt sind.

## Revendications

1. Module de batterie (1000) comprenant :
un ensemble de cellules de batterie (100) dans lequel une pluralité de cellules de batterie sont empilées ;
un cadre de module (200) qui abrite les surfaces supérieure et inférieure et les deux surfaces latérales de l'ensemble de cellules de batterie (100) et qui est ouvert dans ses surfaces avant et arrière ;
un dissipateur (400) qui est situé sur le cadre de module (200), mais inclut aussi une pluralité de trajets d'écoulement de refroidissement (419) ; et
un couvercle d'aération (500) qui est situé sur le dissipateur thermique (400),
dans lequel l'ensemble de cellules de batterie (100) inclut un premier ensemble de cellules de batterie et un deuxième ensemble de cellules de batterie,
dans lequel le premier ensemble de cellules de batterie et le deuxième ensemble de cellules de batterie sont agencés séparément dans une direction de face à face,
dans lequel la pluralité de trajets d'écoulement de refroidissement (419) sont en saillie dans une direction vers le couvercle d'aération (500) par rapport à la surface de fond (410) du dissipateur thermique (400), et
dans lequel un espace entre deux trajets d'écoulement de refroidissement (419) adjacents l'un à l'autre parmi la pluralité de trajets d'écoulement de refroidissement (419) forme un trajet d'écoulement d'aération (519).

2. Module de batterie selon la revendication 1 dans lequel :
le couvercle d'aération (500) fait saillie vers une partie centrale du dissipateur thermique (400), mais inclut aussi une partie de blocage (530) située sur le trajet d'écoulement d'aération (519).

3. Module de batterie selon la revendication 1 dans lequel :
la pluralité de trajets d'écoulement de refroidissement (419) s'étendent le long de la direction longitudinale du dissipateur thermique (400), mais sont aussi espacés les uns des autres.

4. Module de batterie selon la revendication 1 dans lequel :
la partie supérieure du cadre de module (200) est formée avec un trou de refroidissement (211) faisant face à la surface supérieure de l'ensemble de cellules de batterie (100).

5. Module de batterie selon la revendication 4 dans lequel :
le trou de refroidissement (211) inclut un premier trou de refroidissement et un deuxième trou de refroidissement, le premier trou de refroidissement est fait face à une surface supérieure du premier ensemble de cellules de batterie, et le deuxième trou de refroidissement est fait face à une surface supérieure du deuxième ensemble de cellules de batterie.

6. Module de batterie selon la revendication 4, comprenant en outre un élément de transfert de chaleur (300) situé à l'intérieur du trou de refroidissement (211),
dans lequel l'élément de transfert de chaleur (300) est situé entre le dissipateur thermique (400) et l'ensemble de cellules de batterie (100).

7. Module de batterie selon la revendication 6 dans lequel :
l'élément de transfert de chaleur (300) est situé entre le dissipateur thermique (400) et la surface supérieure du premier ensemble de cellules de batterie et entre le dissipateur thermique (400) et la surface supérieure du deuxième ensemble de cellules de batterie, respectivement.

8. Module de batterie selon la revendication 5 dans lequel :
une partie supérieure du cadre de module (200) inclut un ou plusieurs premiers trous d'aération (215) formés entre le premier trou de refroidissement et le deuxième trou de refroidissement.

9. Module de batterie selon la revendication 8 dans lequel :
le ou les premiers trous d'aération (215) sont situés en partie adjacents à une surface du premier ensemble de cellules de batterie, et l'autre partie est située adjacente à une surface du deuxième ensemble de cellules de batterie.

10. Module de batterie selon la revendication 8 dans lequel :
le dissipateur thermique (400) est formé avec un ou plusieurs deuxièmes trous d'aération (415) à une position faisant face au ou aux premiers trous d'aération (215).

11. Module de batterie selon la revendication 10 dans lequel :
le ou les deuxièmes trous d'aération (415) sont situés entre le premier ensemble de cellules de batterie et le deuxième ensemble de cellules de batterie, mais sont aussi situés sur le trajet d'écoulement d'aération (519).

12. Module de batterie selon la revendication 1 dans lequel :
le cadre de module (200) inclut un premier cadre en forme de U (210) et un deuxième cadre en forme de U (250),
le premier cadre en forme de U (210) abrite la surface supérieure et les deux surfaces latérales du premier ensemble de cellules de batterie et du deuxième ensemble de cellules de batterie, et est ouvert dans ses surfaces avant et arrière, et
le deuxième cadre en forme de U (250) abrite la surface de fond et les deux surfaces latérales du premier ensemble de cellules de batterie et du deuxième ensemble de cellules de batterie, et est ouvert dans ses surfaces avant et arrière.

13. Module de batterie selon la revendication 12 dans lequel :
la surface latérale du premier cadre en forme de U (210) inclut une première partie d'extension (219) s'étendant dans une direction extérieure,
la surface latérale du deuxième cadre en forme de U (250) inclut un deuxième partie d'extension (259) s'étendant vers une direction extérieure, et
la première partie d'extension (219) et la deuxième partie d'extension (259) sont en contact l'une avec l'autre.

14. Module de batterie selon la revendication 13 dans lequel :
la première partie d'extension (219) et la deuxième partie d'extension (259) sont couplées l'une avec l'autre par un élément de fixation.
